Europäisches Patentamt

European Patent Office

Office européen des brevets

(11) Publication number: **0 264 632**

**A2**

## (12) EUROPEAN PATENT APPLICATION

(21) Application number: 87113659.4

(22) Date of filing: 18.09.87

(51) Int. Cl.⁴: **F04B 9/10**

(30) Priority: 13.10.86 IT 2198686

(43) Date of publication of application:
27.04.88 Bulletin 88/17

(84) Designated Contracting States:
**DE FR GB**

(71) Applicant: **AFROS S.P.A.**
**Via Galileo Ferraris 33**
**I-21042 Caronno Pertusella Varese(IT)**

(72) Inventor: **Fiorentini, Carlo**
**Via Volonterio n.21**
**I-21042 Saronno Varese(IT)**

(74) Representative: **Coloberti, Luigi**
**Via E. de Amicis No. 25**
**I-20123 Milano(IT)**

(54) Coaxial - piston pumping unit.

(57) A coaxial-piston pumping unit, comprising an outer tubulary body (10) defining a pumping chamber (11) having inlet/outlet aperture (12) and a first piston member (13) freely movable in the aforesaid pumping chamber. Said first piston member (13) is internally hollow to define the chamber (14) of a double-acting control cylinder comprising a second piston member (15) provided at one end of a rod (18) secured to the outer body (10), said rod (16) having ducts (17, 18) for feeding a fluid under pressure.

The pumping unit can be used for feeding and metering liquids, in particular for feeding polyurethane components to a mixing device.

This invention refers to a volumetric pumping unit of the piston type, for feeding liquids or other substances in a fluid state, and concerns, in particular, a piston pumping unit which can be used for feeding and metering chemical components to a mixing apparatus, for example, for feeding proportional quantities of reactive chemical components, to form polyurethane mixtures in a high-pressure mixing head.

There are numerous apparatus which make use of piston pumping units for feeding liquid components to be mixed; in particular, in feeding polyurethane chemical components to a high-pressure mixing head use is made of piston or plunger pumping units of the conventional type, in which a piston pump is axially aligned with a hydraulic control cylinder and in which the movable pistons of the pump and of the hydraulic cylinder are linked together mechanically by means of a common rod.

The structure of such pumping units, which entails an aligned disposition of the pump and the hydraulic control cylinder, is of a considerable overall length, due to the fact that it is necessary to add to the per sè considerable length of the pump and the control cylinder, part of the length of the rod, or other dead spaces between the pump and the cylinder, thus arriving at a considerable overall length. For instance, pumping units used for feeding polyurethane components at pressures in the range of 200 or more atmospheres have overall lengths equal to approximately 2 or 3 metres, according to the working stroke of their pistons. Consequently, such known pumping units give rise to enormous problems in terms of installation, transportation and space occupied.

Therefore, the scope of this invention is to provide a piston pumping unit having an extremely compact structure, by means of which it is possible to reduce the overall length considerably by means of a structurally simple embodiment of the pumping unit itself.

According to the invention, a pumping unit is provided, in which a piston pump is operatively connected to a hydraulic control cylinder, characterized by the fact of comprising an outer tubular body or barrel defining a first pumping chamber having a longitudinal axis and inlet/outlet aperture, a first piston member freely moveable within the aforesaid pumping chamber, and first piston member comprising a second chamber coaxially disposed to the first one, and a second piston member within the second chamber in the aforesaid first piston member, said second piston member being supported at one end of a piston-rod secured to the outer cylindrical body and protruding inside the second chamber in the aforesaid first piston member; the pumping unit moreover comprising sealing means between said piston members and said chambers, and means for guiding the first piston member during its reciprocating movement within the pumping chamber.

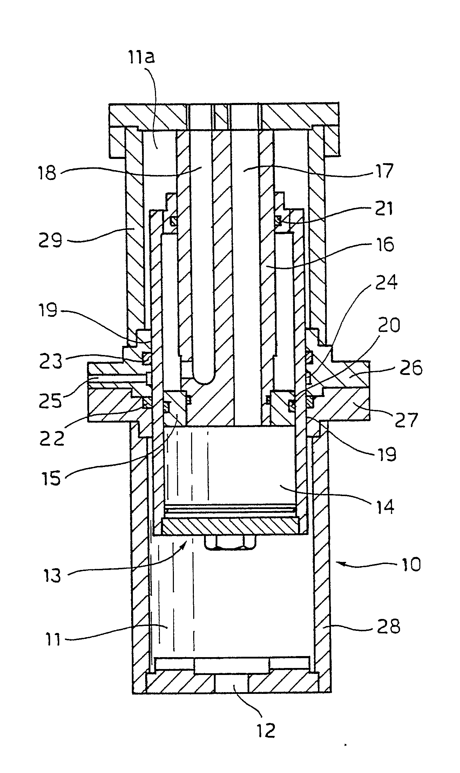

The pumping unit according to this invention will be illustrated in greater detail hereunder, with reference to the figure of the accompanying drawing showing a longitudinal cross-sectional view of the device, in an intermediate operative condition.

As shown, the pumping unit comprises an outer tubular body or barrel 10 defining a pumping chamber 11 having a longitudinal axis and at least one inlet and/or outlet aperture 12 for a liquid or fluid to be pumped at one of its end plates. A piston member 13, smaller in length through said tubular body 10, is situated within the pumping chamber 11 and is freely reciprocable from a forward position to a retracted position so as to carry out the task of pumping the fluid into the chamber 11.

The piston member 13 is internally hollow in order to define a second chamber 14 for a hydraulic double-acting control cylinder; a second piston member 15 is coaxially disposed within the chamber 14 in the piston member 13, and is provided on one end of a shank or piston-rod 16 secured to the end-plate of the outer body 10 opposite that of the inlet and/or outlet aperture 12 for the material to be pumped; ducts 17 and 18 for circulation of oil under pressure are provided in the first shank 16 each feeding duct opening out into the chamber 14 on a respective side of the piston member 15.

The pumping unit moreover comprises sealing means between the pistons 13, 15 and the respective chambers 11, 14 and guide means for guiding the piston member 13 which is freely movable within the pumping chamber 11. These guiding means for the piston member 13, in the case shown, consist of a cylindrical surface 19 disposed along an intermediate section of the pumping chamber 11, which protrudes slightly inside the chamber 11 itself, so as to keep the piston member 11 detached or spaced apart from the inner surface of the pumping chamber by an annular gap. The guide section 19 is preferably situated in an intermediate portion of the chamber 11, close to the internal piston 15, axially extending along both sides of the aforesaid piston 15. Seals 20 and 21 are provided to form a seal between the chamber 11, the piston 15 and the shank 17, while seals 22 and 23 have been provided close to the guide section 19 for the piston member 13. In the event of the described pumping unit being used for feeding fluid under high pressure, it can be provided with a hydraulic sealing means along the guide section 19, comprising at least an annular groove 24 which can be connected to a source of fluid under pressure by means of a duct 25.

According to a possible embodiment of the pumping unit of this invention, the guide surface 19 for guiding the movable piston member 13 is defined by the internal cylindrical surfaces of two flanges 26 and 27 to which are secured the metal barrels 28 and 29 constituting the outer body 10, the first of these barrels delimits the pumping chamber 11 while the second barrel defines an extension 11a of the aforesaid chamber, in order to allow the reciprocating movement of the piston pumping member 13.

The described pumping unit operates as follows: assuming that the piston member 13 is at the end of its forward and downward stroke, by feeding oil under pressure into the upper portion of the chamber 14, through the duct 18, the piston member 13 is pushed backwards or upwards to the end of its stroke; by so doing, the oil contained in the other portion of the chamber 14 is made to return to an oil tank, which the chamber 11 fills up with the liquid to be pumped which is sucked through the aperture 12. When the piston member 13 reaches the end of its backward stroke, and the chamber 11 is completely filled, the feeding of the oil into the chamber 14 is reversed, so that the piston member 13 is now moved forward, pumping the liquid contained in the chamber 11 through the aperture 12.

From what has been described and shown in the accompanying drawing, it can be seen that the invention refers to a piston pumping unit structured in such a way that the hydraulic cylinder actuating the pump is coaxially disposed within the pumps itself thanks to the dual function carried out by the piston member 13 freely movable within the chamber 11 and not restrained by any control rod whatsoever. A considerable reduction in the overall length of the entire pumping unit is thus achieved, together with all the advantages deriving therefrom.

## Claims

1. Pumping unit in which a piston pump is operatively connected to a double-acting hydraulic control cylinder, characterized by the fact of comprising a tubular outer body (10) defining a first pumping chamber (11) having a longitudinal axis and inlet/outlet aperture (12), a first piston member (13) freely movable within the aforesaid pumping chamber (11), said first piston member (13) comprising a second chamber (14) coaxially disposed to the first one, and a second piston member (15) disposed coaxially to and within the second chamber (14) in the aforesaid first piston member (13), the second piston member (15) being connected to one end of a piston-rod (16) secured to the cylindrical outer body (10), and protruding inside the second chamber (14) in the aforesaid piston member (13); sealing means (20, 21,22) between said piston members (13, 15) and said chambers (11, 14); the pumping unit moveover comprising guide means (19) for guiding the first piston member (13) during its reciprocating movement within the pumping chamber (11).

2. Pumping unit as claimed in claim 1, characterized by the fact of comprising feed ducts (17, 18) for feeding and circulating a control fluid into the second chamber (14) inside the first piston member (13), which extends through the piston-rod (16) supporting the aforesaid second piston member (15).

3. Pumping unit as claimed in claim 1, characterized by the fact that the means for guiding the first piston member comprises an intermediate cylindrical guiding surface (12) which protrudes slightly inside the pumping chamber (11).

4. Pumping unit is claimed in claim 1 and 3, characterized by the fact that the cylindrical guiding surface (12) for the first piston member (13) is positioned close to the second piston member (15).

5. Pumping unit as claimed in claim 4, characterized by the fact that the guiding surface (19) axially extends into the pumping chamber (11) on both sides of the second piston member (15).

6. Pumping unit as claimed in claim 3, characterized by the fact that the sealing means (22, 23, 24) are provided on the guiding surface (19) for the first piston member (13).

7. Pumping unit as claimed in claim 6, characterized by the fact that said sealing means comprise hydraulic sealing means (24).

11a

18

29

19

23

25

22

15

13

11

17

21

16

24

20

26

27

19

14

10

28

12